# EUROPEAN PATENT APPLICATION

(11) **EP 4 792 685 A1**
(43) Date of publication of application: **19.08.2026**
(21) Application number: 26156385.2
(22) Date of filing: 04.02.2026
(51) Int. Cl.: A43B 13/04, A43B 13/12, A43B 23/02, B29D 35/14, A43B 13/22

(54) **STENCIL PRINTING OF LIQUID TPU**

(30) Priority: 13.02.2025 DE 102025105394
(71) Applicant: adidas AG, 91074 Herzogenaurach (DE)
(72) Inventor: Voelker, Felix, 91074 Herzogenaurach (DE); Mergenthaler, Patrick, 91074 Herzogenaurach (DE)
(74) Representative: Bardehle Pagenberg Partnerschaft mbB Patentanwälte Rechtsanwälte

(57) **Abstract**

The present invention relates to a method (100) for manufacturing an apparel or footwear (240), preferably of a sports shoe (260), comprising the steps of: (a.) providing (110) a liquified polymer (230); (b.) arranging (120) the liquified polymer onto a support layer (250) via a stencil with one or more cutouts, wherein the liquified polymer is applied through one or more cutouts of the stencil; thereby printing the liquified polymer on the support layer in a pattern; (c.) optionally removing (130) the stencil, and (d.) curing (140) the printed liquified polymer onto the support layer (250), thereby obtaining (150) the apparel or footwear (240) or at least a part thereof. Other aspects of the present invention relate to an apparel or footwear and an outsole manufactured according to the method and a sports shoe comprising an apparel or footwear or an outsole.

## Description

### FIELD OF THE INVENTION

The present invention relates to a method for manufacturing an apparel or footwear, preferably of a sports shoe, an apparel or footwear and an outsole manufactured according to the method and a sports shoe comprising an apparel or footwear or an outsole.

### BACKGROUND

Different types of sport require specific types of footwear to ensure performance and functionality. The state-of-the-art methods for manufacturing the footwear or an apparel e.g. of sport shoes typically involve a combination of advanced materials and precision manufacturing techniques to improve durability, performance, comfort, and sustainability.

Injection molding is widely used in the manufacture of soles. In particular, injection molding is precise and has the ability to combine materials such as ethylene-vinyl acetate (EVA), thermoplastic polyurethane (TPU), and rubber into a single outsole. This allows intricate designs and moreover, different hardness levels. However, it involves high initial setup costs, limited material compatibility, and concerns about the environmental impact of petroleum-based thermoplastics. Direct injection molding or direct attach technology creates a strong bond between the outsole and the upper, eliminating adhesives, but requires expensive machinery and limits intricate outsole designs.

Another approach is compression molding, which is cost-effective for large-scale production and produces highly durable outsoles. However, compression molding has the disadvantage that it lacks the design flexibility of injection molding. Moreover, this method further generates waste material during the process which is ecologically not beneficial.

Vulcanization is another popular method for producing durable and resilient rubber outsoles, especially for high-performance sports, but is energy-intensive, environmentally taxing due to chemical use, and less suited for flexible, complex patterns. Laser cutting and engraving enable precision in outsole design, adding functional textures or aesthetic details, but they are restricted to certain materials and may leave surface imperfections, which requires additional finishing.

However, a common disadvantage of these soles is that the process of sole manufacturing cannot be flexibly changed or implemented during the overall manufacture process and its application is rather rigid. Furthermore, another disadvantage is the inflexible design of the sole material, which once prepared cannot be easily changed or adapted to specific needs of the sole.

Furthermore, another disadvantage of the prior art is the use of hazardous and harmful liquids in the manufacture of lightweight footwear. Typically, vaporous solvents which can be removed quickly are used during the process of the manufacture of lightweight sportswear or footwear. However, the usage of these hazardous solvents requires professional handling and specific transportation. Furthermore, this usage results in the production of chemical waste which is undesired during the overall process, as removal and transportation of chemical waste is costly and complex, and further unbeneficial in terms of environmental aspects.

Further prior art is known from DE 693 26 581 T2.

### SUMMARY OF THE INVENTION

Therefore, the object of the present invention is to provide an improved method and outsole, as well as a sports shoe comprising the apparel or footwear in order to at least partly overcome the above-mentioned deficiencies of the prior art.

The above-outlined problems are addressed by the aspects of the present invention.

In a first aspect, the present invention is directed to method for manufacturing an apparel or footwear, preferably for a sports shoe, comprising the steps of:
a. providing a liquified polymer;
b. arranging the liquified polymer onto a support layer via a stencil and/or a screen with one or more cutouts, wherein the liquified polymer is applied through one or more cutouts of the stencil; thereby printing the liquified polymer on the support layer in a pattern;
c. optionally removing the stencil, and
d. curing the printed liquified polymer onto the support layer, thereby obtaining (150) the apparel or footwear or at least a part thereof.

The method of the present invention has shown to provide a more beneficial and flexible process for manufacturing an apparel or footwear. A conventional sole structure, for example an outsole for a sports shoe usually is manufactured by e.g. injection molding. The method according to the invention is based on a different approach, namely, the production of a liquified polymer by mixing the polymer and the solvent and/or additives which is printed via a stencil on a support layer. The method of the present invention is more efficient as compared to methods known in the prior art, as the present method integrates the steps of arranging and printing the liquified polymer onto a support layer into the production process. Furthermore, application of the liquified polymer via a stencil offers flexibility for customization of the apparel or footwear and the overall process. This dual capability is valuable for improving the apparel or footwear and its method for manufacturing. Additives may impact stability, viscosity, curability and/or solubility.

The method of the present invention may be used for the manufacture of accessories and/or garments. For example, the present method may be used for the back of a football glove or the upper of a football boot. For example, in this regard, silicone may be used in the method of the present invention and, e.g. stencil printed.

The present method for manufacturing apparel or footwear eliminates the need for additional process steps for producing a pattern which reduces cycle time and increases throughput. Furthermore, the combination of arranging, applying and printing the liquified polymer in a single step avoids the cost of post-processing equipment like lasers or chemical etching systems and reduces labor costs. For example, when printing on a structured support layer, the structure will be transferred on the apparel and/or footwear as well. Moreover, the obtained pattern by the application of the liquified polymer via stencil and curing results in overall fewer processing steps, which leads to lower energy consumption of the overall process, such as for heating, handling, or operating additional machinery. The method of the present invention further allows for individual changes or customization during the process, like unique branding, part identification, or product differentiation by adapting the stencil without the necessity to alter the process. In this manner, process cost and time of creating new molds or dies when a different pattern and/or surface structure is required is avoided, leading to a more cost-efficient method.

Furthermore, when using the method of the present invention, a more scalable process is provided. When increasing the production volume, the method of the present invention remains efficient. In particular, attaching the part and/or the apparel or footwear can take place during the step of curing, which can be incorporated as an automated process, leading to high repeatability and high throughput.

Moreover, when using the method of the present invention e.g. glue- and injection molding-based deposition is avoided while providing an apparel or footwear in a cost- and time-efficient manner, as less material is required. Moreover, the present invention provides for a support layer which is advantageous in terms of transportation and flexibility for subsequent steps, such as a direct attachment process.

Accordingly, the method of the present invention improves speed, cost, flexibility automation (automated, scalable approach), material efficiency, risk management (back-up option for process flexibility, reduced handling of hazardous material) and customization of the overall process for manufacturing an apparel or footwear.

While the apparel or footwear can be specifically used to create a lighter and thinner e.g. outsole, the apparel or footwear can be further used to enhance the design and visual appeal of the sports shoe for particular sports, e.g. when arranging the liquified polymer in particular zones of the footwear and/or sportswear. In particular, a finer and delicate apparel and/or footwear is obtained by the method of the present invention, which cannot be achieved with conventional processes, such as molding.

In this manner, the apparel or footwear is manufactured more efficiently while the liquified polymer can be arranged more precisely and effectively. By doing so, no material waste is produced e.g. by cutting excess material. In this manner, the method according to present invention provides for an improved method for producing the inventive sole structure for e.g., a sports shoe, by only consuming as much material as needed and avoiding any waste production.

The method of the present invention has shown to provide an apparel or footwear which enhances the performance of an athlete while reducing the overall weight of the apparel or footwear. When using the apparel or footwear according to the invention, the running performance of the wearer, e.g. an athlete is substantially improved due to its lightweight characteristic. Due to the reduced weight, the apparel or footwear provides for an improved overall workout experience and result. In particular and when comparing to conventional apparel or footwear, the apparel or footwear of the present invention exhibits a drastic improvement in weight. Moreover, the apparel or footwear has the advantage that it can be individually designed based on the needs and requirements of the e.g. athlete. Furthermore, the apparel or footwear is considerably thinner, due to the inventive materials and manufacturing method, making the overall apparel or footwear more desirable and visually appealing.

An *"apparel"* according to present disclosure is but not limited to any part of clothing or garments designed for wear. Apparel encompasses a wide range of items, including outerwear, underwear, footwear, and accessories, made for different purposes such as fashion, functionality, or cultural expression. Apparel comprises any part of a sportswear.

*A "footwear"* according to present disclosure is but not limited to any garments worn on the feet for protection, comfort, and/or style. Footwear comprises a wide variety of items such as shoes, sandals, boots, slippers, particularly athletic and/or sport shoes. Footwear provides for support, cushioning, and/or traction. Footwear comprises also any part of a shoe or footwear or sportswear that provides structure, texture and/or traction for the wearer.

A *"polymer"* according to present disclosure is but not limited to, a polymer preferably made from durable and long-lasting materials. In particular, the polymer material will provide for the contacting zone, which is in contact with e.g. the ground during for example the course of a gait. Furthermore, the polymer layer provides for flexibility, durability, cushioning, and support in the apparel or footwear.

*A "support layer"* according to present disclosure is but not limited to, a structural or functional component in a system, designed to provide stability, protection, or additional functionality to the polymer layer. The support layer may be a thin film such as a film layer, that is used for arranging the polymer on said support layer. The liquified polymer can be flexibly and easily further processed, e.g. in an attachment process, such as heat-pressing the arranged polymer via the support layer onto a further component (e.g. mid-sole and/or outsole) or transported, stored and subjected on the support layer to another process step. A support layer may help to maintain the structural integrity of the apparel or footwear or part thereof. The support layer does not necessarily need to be part of the sports shoe, for example may be removed when further processing the apparel or footwear. The support layer can be e.g. a midsole and include materials that absorb shock and reduce the impact on the joints. The support layer is made from durable materials to withstand the wear and tear of regular use. The support layer works in conjunction with other layers of the apparel or footwear and the sports shoe. For example, a support layer may comprise textile, fiber, polyester-based materials, nylon or the like.

The *"liquified polymer"* is to be understood but not limited to, as the polymer having semi-solid or liquid physical properties. The liquified polymer comprises a polymer and a liquifying element, such as a solvent.

*"Curing"* according to present disclosure is to be understood but not limited to, as a chemical and/or physical process of hardening, setting and/or solidification of the polymer. Curing may be carried out using radiation.

*"Mixing"* according to present disclosure is to be understood but not limited to, as a process of combining one or more substances resulting in a mixture of the individual substances, preferably in a liquid form.

*"Arranging"* according to present disclosure is to be understood but not limited to, as a process of applying and/or depositing, for example the liquified polymer onto the support layer.

*"Printing"* according to present disclosure is to be understood but not limited to, as any process used to apply e.g. designs, patterns, branding, or functional elements to shoe components, such as uppers, soles, or insoles. Printing may serve aesthetic, functional, or branding purposes.

The apparel or footwear may be an outsole of the sports shoe. The liquified polymer may comprise a polymer and a solvent. The polymer may be a mixture of one or more polymers. The mixture may comprise pigments, coloring and/or additives. The solvent may be a water-soluble solvent selected from the group comprising: ethanol, acetone, isopropyl alcohol, methanol, glycerol, propylene glycol and/or dimethyl sulfoxide (DMSO), preferably DMSO.

These solvents have shown to emit fewer volatile organic compounds (VOCs) compared to traditional organic solvents, making them eco-friendlier and more compliant with environmental regulations. Furthermore, the solvent of the present invention degrades more easily in the environment, reducing long-term environmental impact. Moreover, these specific solvents are less toxic and hazardous compared to solvents commonly used in the prior art, reducing health risks such as respiratory issues or skin irritation when handling the solvents. The solvents of the present invention are further non-flammable, enhancing workplace safety by minimizing fire hazards.

Cost-effectiveness is another key advantage, as the solvents of the present invention involve lower disposal costs due to simpler waste treatment and can be economically diluted with water, reducing reliance on expensive chemicals. Process efficiency is enhanced as these solvents simplify equipment cleaning-often requiring just water for residue removal-and allow for flexible formulation adjustments by easy mixing and dilution. Additionally, they contribute to better product quality, such as smoother and more uniform coatings or adhesives. Accordingly, these benefits are evident even more in applications like e.g. water-base.

When a water-soluble solvent is used, the step of curing the printed liquified polymer may comprise the step of treating the printed liquified polymer with an extraction agent, preferably water.

For example, for extracting the solvent e.g. DMSO from the printed liquified polymer which is located onto a support layer, the extraction agent, e.g. water can be applied for example by spraying the extraction agent onto the printed liquified polymer. In this manner, the extraction agent is applied onto the printed, still liquid polymer. In this manner, the extraction agent extracts the solvent of the liquified polymer and solidifies the printed polymer on the support layer. Another approach comprises e.g. dipping the printed liquified polymer into a bath comprising the extraction agent, e.g. water. For example, the printed liquified polymer remains in contact with the water for several minutes. In this manner, the solvent in the liquified polymer is removed by extracting the solvent by the extraction agent present in the bath. Specifically, the longer the contact time, the more solvent may be removed.

Specifically, after extracting the solvent from the printed liquified the solvent/extraction-agent-phase may be removed from the printed liquified polymer by e.g. wiping. Without wishing to be bound to any theory, it is conceivable that the extraction agent may e.g. evaporate quicker than the solvent during the step of curing. In this manner, the solvent would remain on the surface of the printed liquified polymer. This remaining solvent may then liquefy the printed polymer. It is conceivable, that the step of extraction may be performed more than once. In this manner, it is ensured that the solvent will be sufficiently removed.

It is conceivable that the step of dipping (e.g. into a water bath) may be performed for at least 1 hour. Preferably, the step of dipping (e.g. into a water bath) may be performed for 2 hours. More preferably, the step of dipping (e.g. into a water bath) may be performed for 4 hours. Even more preferably, the step of dipping (e.g. into a water bath) may be performed for 8 hours. Most preferred, the step of dipping (e.g. into a water bath) may be performed for 12 hours. It is conceivable, that the step of dipping may be performed for 10 days, preferably 7 days.

The method may further comprise the steps of:
e. removing the cured printed polymer from the support layer, thereby obtaining at least a part of the apparel or footwear; and
f. attaching the part of the apparel or footwear to a base layer.

The method may further comprise the steps of:
g. attaching the support layer with the cured printed polymer to a base layer, in particular a bottom part of a mid-sole; and
h. removing the support layer from the part of the apparel or footwear, thereby obtaining at least a part of the apparel or footwear attached on the base layer.

The method steps of the present invention avoid e.g. glue- and injection molding-based deposition while providing an apparel or footwear in a cost- and time-efficient manner, as less material is required. Furthermore, the method uses a support layer which is advantageous in terms of transportation and flexibility during the process and subsequent steps, such as a direct attachment process.

Specifically, attaching comprises bringing into contact the part of the apparel or footwear/base layer to be attached on (or both) into contact with the solvent, e.g. DMSO. In this manner, the solvent may redissolve the contacted material.

Specifically, the solvent may be used in an amount of at least 0,0001 ml/cm². According to some embodiments, the solvent may be used in an amount of preferably at least 0,001 ml/cm². According to some embodiments, the solvent may be used in an amount of more preferably at least 0,01 ml/cm². According to some embodiments, the solvent may be used in an amount of even more preferred at least 0,1 ml/cm². According to some embodiments, the solvent may be used in an amount of most preferred at least 1 ml/cm².

In this regard, the solvent may be applied by various means such as brushing, spraying and/or dipping. Specifically, the volume of solvent may depend on the kind of polymer used.

According to some embodiments, attaching may be performed at a temperature between 30 to 300°C. According to some embodiments, attaching may be performed at a temperature preferably between 50 to 280°C. According to some embodiments, attaching may be performed at a temperature most preferred between 70 to 260°C.

For example, when heat-pressing the part of the apparel, the temperature may be adjusted to be sufficient to at least soften the component and the e.g. midsole material. The temperature may vary from these specific temperature ranges.

In addition, or alternatively, attaching may be performed in at most 12 min. Preferably, attaching may be performed in at most 10 min. More preferably, the attaching may be performed in at most 6 min. Even more preferably, attaching may be performed in at most 4 min. Further more preferred, attaching may be performed in at most 2 min. Most preferred, attaching may be performed in at most 1 min.

The step of attaching the part of the apparel or footwear to the base layer may comprise one or more of glueing, cementing, press-heating, pressing and/or injection molding.

In addition, or alternatively, the step of attaching the part of the apparel or footwear may comprise the steps of:
i. melting the part,
j. sintering the melted part,
k. redissolving the sintered part,
l. welding the redissolved part; and
m. pressing the welded part to the base layer.

In this regard, the base layer may be a mid-sole. Specifically, the support layer of the part of the apparel or footwear may be removed. However, it is conceivable that the support layer of the part of the apparel or footwear may be remained and removed at a later step. Specifically, and for example when using DMSO to redissolve the part and/or the base layer, e.g. the midsole, each or both components are brought into contact with the solvent, i.e. DMSO. Afterwards, the part of the apparel comprising the stencil-printed pattern, which is arranged on the support layer, for example a film layer, is placed on the midsole. The film layer may be removed after placing the part on the mid-sole.

The midsole may be placed on a support structure, e.g. to prevent deformation when under pressure. Specifically, a component comprising a negative of the pattern of the midsole/outsole surface structure is placed on the support layer, e.g. the film layer. Subsequently, the part which is placed on the base layer is subjected to the step of drying. During the step of drying, weights are applied. The method may further comprise the step of drying the base layer together with the welded part.

In the step of drying, a weight of at least 100 g is applied. In some embodiments, in the step of drying, a weight of at least 1 kg is applied. In some embodiments, in the step of drying, a weight of at least 10 kg is applied. In some embodiments, in the step of drying, a weight of at least 100 kg is applied.

In this manner, it is ensured that all parts of the part of the apparel are in contact with the base layer, e.g. the midsole surface to ensure sufficient and complete bonding.

For example, when heat-pressing the part to the base layer, and when using DMSO to redissolve the part and/or the base layer, e.g. the midsole, each or both are brought into contact with the solvent, i.e. DMSO. Subsequently, the part of the apparel comprising the stencil-printed pattern, which is arranged on a support layer, e.g. a film, is placed on the midsole.

Specifically, the midsole may be placed on a support structure, e.g. to prevent deformation when under pressure. After that, a top piece showing a negative of the pattern of the midsole/outsole structure is being placed on top of the transfer film. Afterwards, the placed part on the base layer is subjected to the step of pressing. The method may further comprise the step of pressing the base layer with the part, preferably using heat. During the step of pressing, weights are applied.

In the step of pressing/drying, a weight of at least 10 g is applied. In some embodiments, in the step of drying, a weight of at least 100 g is applied. In some embodiments, in the step of drying, a weight of at least 1 kg is applied. In some embodiments, in the step of drying, a weight of at least 10 kg is applied. It is further conceivable, that in the step of pressing/drying, a weight of at least 50 kg, preferably, 80 kg, more preferably at least 100 kg is applied.

It is conceivable that a combination of attachment process and heat-pressing may be possible. In particular, attaching/bonding via a solvent, e.g. DMSO is applied and subsequently a heat-pressing step is performed. In this manner it is ensured that enhanced and sufficient bonding occurs, in particular on the rim of the apparel and/or part and/or base layer.

Welding the part may be performed using infrared radiation (IR), high frequency (HF) radiation and/or ultrasonic radiation.

Arranging the liquified polymer may be performed comprising one or more of: dispensing, spraying, jetting, printing, coating, spin coating, casting, depositing, dipping, brushing, roller coating, injecting and/or additive manufacturing such as stereolithography (SLA) and/or selective laser sintering (SLS).

The liquified polymer may be arranged onto the support layer by 3D printing. 3D printing comprises additive manufacturing methods, such as stereolithographic methods and laser sintering. With stereolithographic methods light causes chemical monomers and oligomers to cross-link together to form layer-wise polymers making up the 3D printed object. With laser sintering a laser causes powdered material to sinter due to heat. Aiming the laser at points in space defined by a 3D model, binding the material together creates a solid structure. Another example of an additive manufacturing method is fused deposition modeling in which the part is produced by extruding small beads or streams of material which harden immediately to form layers. If both the midsole and the upper are manufactured using a 3D printing process, the midsole and the upper may be manufactured in separate 3D printing processes and connected afterwards, e.g. by gluing, welding, sewing, etc. Alternatively, the midsole and the upper may be manufactured together in a single manufacturing step.

The part of the footwear may be an outsole of the sports shoe. The support layer may be a midsole and/or a shoe upper and/or parts thereof. The support layer may be a film.

Accordingly, the liquified polymer is arranged onto e.g. the midsole, and forming an outsole. In this embodiment, the polymer material of the midsole may be an ethylene-vinyl acetate (EVA), a thermoplastic urethane (TPU) or a supercritical foam. Those materials provide good cushioning properties while being relatively lightweight.

The midsole may comprise a polymer selected from the group comprising: thermoplastic polyurethanes (TPUs), polyether block amide (PEBA), ethylene vinyl acetate (EVA), and/or thermoplastic elastomers, preferably polyurethane and/or expanded thermoplastic polyurethane (eTPU).

The liquified polymer may be arranged onto one or more sections of the sports shoe, including a toe section, a forefoot section, a heel section, a midsole section, a sidewall section and/or an upper section.

The liquified polymer may be arranged onto one or more predetermined portions of the apparel or footwear determined using a torsion map, an abrasion map and/or a pressure map. The liquified polymer can be applied onto different sections while being individually textured in the subsequent steps. Moreover, the liquified polymer may be arranged onto a plurality of sections.

The liquified polymer may be arranged onto one or more predetermined portions of the sports shoe determined using a torsion map, an abrasion map and/or a pressure map. This has the advantage that the apparel or footwear can be individually adapted to specific needs of the user.

The liquified polymer may be arranged onto the support layer with a thickness of 0.1-10 mm. Preferably, the liquified polymer may be arranged onto the support layer with a thickness of 0.12-4 mm. More preferably, the liquified polymer may be arranged onto the support layer with a thickness of 0.15-2 mm. Even more preferably, the liquified polymer may be arranged onto the support layer with a thickness of 0.17-1 mm. Most preferred, the liquified polymer may be arranged onto the support layer with a thickness of 0.2-0.8 mm.

The thickness of the apparel or footwear or at least a part thereof may be 0.3-0.7 mm. Preferably, the thickness of the apparel or footwear or at least a part thereof may be 0.5 mm.

The stencil may be a screen, preferably a mesh.

The liquified polymer may be arranged in a first section of the apparel or footwear with a dynamic viscosity of 50000 to 200000 mPa·s; and in a second section of the apparel or footwear with a dynamic viscosity of 10000 to 50000 mPa·s.

The contact angle θ between the liquified polymer and the support layer may be 30° to 110°, preferably 40° to 90°, more preferably 50° to 70°.

The curing step may be carried out using radiation.

The liquified polymer may comprise a polymer and a solvent. The polymer may be selected from the group of polyurethanes (PU), thermoplastic polyamides (TPE-A or TPA), thermoplastic polyesters (TPE-E or TPE), thermoplastic styrenic block copolymers (TPE-S or TPS), thermoplastic polyurethanes (TPE-U or TPU), thermoplastic vulcanizates (TPE-V or TPV), rubber or ethylene-vinyl copolymer (EVA), preferably thermoplastic polyurethanes (TPE-U or TPU), and/or combinations thereof.

These polymers allow for an enhanced applicability. Moreover, the use of these specific polymers has shown that a time efficient and sustainable process in the production of the apparel or footwear is achieved while providing for a more durable and long-lasting sole structure. Suitable polymer materials may be elastic foam materials, such as thermoplastic elastomers and/or elastomers. Preferred materials used in present disclosure are thermoplastic elastomers.

The liquified polymer and the support layer which is not a film layer may be dissolvable by the solvent, wherein preferably the solvent is the same.

The polymer of the support layer and the liquified polymer may be TPU.

The pattern may be a grid, lattice, line, spiral, honeycomb, dots, wave, sine wave pattern or any combinations thereof. In particular, the pattern may be selected from the group comprising one or more of: rectangular, grid, lattice, line, spiral, honeycomb, dots, wave or any combination thereof. The apparel or footwear can be individually designed and can provide a plurality of pattern. It is conceivable that the apparel or footwear may have more than one surface structure. Alternatively, or in addition, the pattern may be an outlined and/or filled pattern.

These specific patterns further improve the traction of the apparel or footwear, which helps the wearer to maintain a secure footing on a variety of surfaces. Due to this improved traction, the wearer experiences greater stability, which reduces the chances of slipping or losing balance. This is especially important in sports requiring sudden stops, lateral movements, and quick turns, such as e.g. running, football, basketball, and tennis.

The solvent may be a mixture selected from the group of solvent-borne and/or water-borne solvents, preferably from the group of solvent-borne solvents, more preferably from the group of (C₁-C₆) ethers, (C₁-C₁₀) esters, (C₁-C₈) ketones, (C₁-C₈) alkanes, and/or combinations thereof.

In particular the use of these polymer allows for a time efficient and sustainable process in the production of the component. Suitable polymer materials may be elastic foam materials, such as thermoplastic elastomers and/or elastomers. Preferred materials used in present disclosure are thermoplastic elastomers. More preferred materials used in present disclosure are urethane-based thermoplastic elastomers (TPU), polyester-based thermoplastic elastomers (TPE) and/or polyamide-based thermoplastic elastomers (TPA).

These solvents have shown the best compatibility with the production method of the apparel or footwear, while allowing for flexible adaptation of physical characteristics of the polymer to the requirements of the product and the process.

The solvent may be a mixture of one or more of tetrahydrofuran (THF), methyl ethyl ketone (MEK), cyclohexane (CYC), ethyl acetate, butyl acetate, acetone, acetonitrile, benzyl alcohol, chlorobenzene, dichloromethane, dimethyl sulfoxide (DMSO), methyl tert-butyl ether (MTBE), N-methyl-2-pyrrolidone (NMP), dimethylacetamide (DMAC), dimethylformamide (DMF), pyridine, toluene, preferably THF and/or CYC. The solvent may be cyclohexanone.

These solvents have the advantage that they can be removed in a time efficient manner during the curing process and allow for a production process that is capable of adapting to various physical properties of the liquid polymer.

The ratio of the mixture may be in the range of 10 to 90 vol. %., preferably 20 to 80 vol. %, more preferably 30 to 70 vol. %.

In this manner, the ratio of the mixture of the solvent shows the best compatibility for both mixing the polymer and changing/adapting the physical characteristics of the liquified polymer to the special requirements of the product and the process.

Accordingly, the specific ratio of solvent to the polymer allows for convenient use in the deposition process and flexible adaptation to the requirements of the product and/or process.

The polymer may be characterized by a Shore A value and/or Shore D value, wherein the Shore A value may be in the range of 20 to 120, preferably 40 to 100, more preferably 60 to 80; and the Shore D value is in the range of 2 to 80, preferably 5 to 75, more preferably 8 to 70.

The use of a polymer comprising these Shore A and/or Shore D values provide for the durable properties of the polymer layer and the overall sole structure.

The concentration of the polymer may be in the range of 5 to 60 wt.%, preferably, 7 to 50 wt.%, more preferably 10 to 40 wt.%, most preferred 15 to 30 wt.%.

The liquified polymer may comprise a dynamic viscosity of 10000 to 50000 mPa·s, preferably of 20000 to 40000 mPa·s.The liquified polymer may comprise a dynamic viscosity of 100000 to 500000 mPa·s,preferably of 100000 to 300000 mPa·s.

Different viscosities may be obtained by varying the mixing ratio of the solvent and the polymer. In this manner, it is possible to deposit different viscous materials on the second component by using one operation step. The method allows for flexible adaptation of the operation step based on the needs of the product.

In the curing step, a curing temperature of between 20°C to 250°C, preferably 30°C to 150°C, more preferably 40°C to 50°C may be used; and wherein in the step of curing the liquified polymer the curing time may be between 2 min to 750 min, preferably, 5 min to 390 min, more preferably 10 min to 180 min.

In particular, in the curing step a curing temperature of between 20°C to 150°C, preferably 40°C to 100°C, more preferably 60°C to 80°C, most referred 72°C to 78°C may be used; and wherein in the step of curing the liquified polymer the curing time may be between 2 min to 24 hours, preferably, 5 min to 12 hours, more preferably 10 min to 6 hours, most preferred 20 min to 3 hours. Alternatively, in the step of curing the liquified polymer the curing time may be between 2 min to 750 min, preferably, 5 min to 390 min, more preferably 10 min to 180 min.

These curing conditions allow for the cost- and energy-efficient process for the production of the apparel or footwear.

In a second aspect, the present invention relates to an apparel or footwear or at least a part thereof manufactured according to the method of the present invention. The apparel or footwear has the advantage that it can be individually designed based on the needs of the wearer/user, by adapting the stencil shape during the process. Furthermore, the apparel or footwear is considerably lighter and thinner, due to the inventive materials and manufacturing method, making the overall apparel or footwear or part thereof more desirable.

In a third aspect, the present invention relates to an outsole manufactured according to the method of the present invention. The outsole may have a surface structure formed by the cured polymer. Specifically, the surface structure is affected by the support layer. For example, when using a support layer having a smooth and even surface, the cured polymer will have a smooth and even surface structure. When using a support layer with an uneven and rough surface, the cured polymer will have an uneven and rough surface structure.

The outsole of the present invention is considerably thinner and lighter than outsoles known in the art. Moreover, the outsole can be individual designed and adapted to specific needs of the user. The outsole may comprise one or more surface structures. It is conceivable, that the outsole comprises different surface structures, which aim to provide different functionalities to the outsole. However, it is also conceivable that the outsole comprises a plurality of surface structures, which are identical in terms of pattern, but differ in depth, thickness or the like.

It is conceivable that the outsole provides traction and grip when used by a wearer. Furthermore, the surface structure allows for a smooth and/or rough design, which may be desirable for the user. While the apparel or footwear can be specifically used to create a lighter and thinner e.g. outsole, the apparel or footwear can be further used to enhance the grip of the sports shoe for particular workouts, e.g. when arranging the liquified polymer in particular zones of the sports shoe.

In a fourth aspect, the present invention relates to a sports shoe comprising an apparel or footwear or at least a part thereof according to the second aspect of the invention or an outsole according to the third aspect of the invention.

The sports shoe comprising the outsole according to present invention is considerably lighter, and thinner, making the overall sports shoe more desirable. In addition, the sports shoe exhibits enhanced durability and performance properties than sports shoes known in the art due to the use of the inventive outsole.

The many advantages discussed in the context of the first aspects of the present invention apply also to the further aspects of the present invention i.e. the advantages discussed for the method of the present invention apply to the apparel or footwear, outsole and sports shoe of the present invention.

We emphasize that all aspects, features, and options discussed and disclosed above within the context of the first aspect may be applied to, or combined with, the discussion and disclosure of the second, third and fourth aspect, and *vice versa,* unless physically or technically ruled out, even if not every possible combination or sub-combination of features is explicitly spelled out in the following. The technical advantages of such options and features that have already been discussed above are therefore not repeated, at least not to the same degree of detail, and reference is instead made to the corresponding explanations above, for conciseness.

### SHORT DESCRIPTION OF THE FIGURES

Possible embodiments of the present invention are further described in the following detailed description with reference to the following figures:
- **Fig. 1:**: shows a flow diagram of the method for manufacturing the apparel or footwear.
- **Figs. 2 to 4:**: show preferred embodiments of the apparel or footwear manufactured using the method according to the invention.

### DETAILED DESCRIPTION OF PREFERRED EMBODIMENTS

Possible embodiments of the different aspects of the present invention and disclosure are described below, predominately with respect to sport shoes. It is, however, once again emphasized that the different aspects may also be practiced in different kinds of soles and shoes and are not limited to the specific embodiments set forth below.

Reference is further made to the fact that in the following only individual embodiments can be described in more detail. The skilled person will understand that the features and possible modifications described with reference to these specific embodiments may also be further modified and/or combined with one another in a different manner or in different sub-combinations, without departing from the scope of the present invention and disclosure. Individual features or sub-features may also be omitted if they are dispensable to obtain the desired result. In order to avoid redundancies, reference is therefore made to the explanations in the preceding sections, which also apply to the following detailed description.

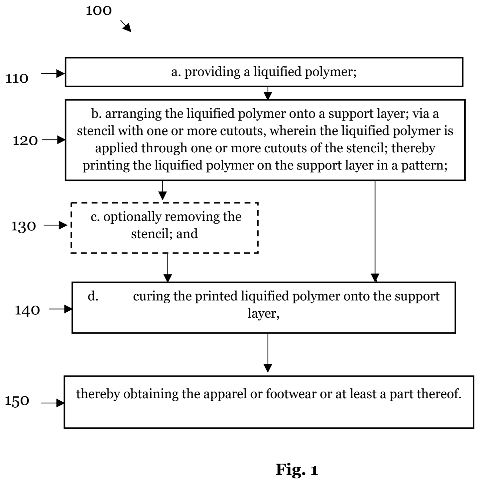

In **Fig. 1****,** a flowchart for method 100 for manufacturing an apparel or footwear 240, preferably for a sports shoe 260 is shown.

In step 110, the liquified polymer is provided. The liquified polymer comprises a polymer and a solvent. The ratio of the polymer to the solvent is in the range of 2:98 to 40:60 vol.%, preferably, 5:95 to 30:70 vol.%, more preferably, 10:90 to 20:80 vol.%.

The liquified polymer 230 is arranged in a first section of the apparel or footwear with a dynamic viscosity of 50000 to 200000 mPa·s. In a second section of the apparel or footwear, the liquified polymer 230 is arranged with a dynamic viscosity of 10000 to 50000 mPa·s.

Alternatively, the liquified polymer 230 comprises a dynamic viscosity of 10000 to 50000 mPa·s.Preferably, the liquified polymer 230 may comprise a dynamic viscosity of 20000 to 40000 mPa·s.The liquified polymer may comprise a dynamic viscosity of 100000 to 500000 mPa·s,preferably of 100000 to 300000 mPa·s.

The contact angle θ between the liquified polymer 230 and the support layer is 250 is 30° to 110°. Preferably, the contact angle θ between the liquified polymer 230 and the support layer may be 40° to 90°. More preferably, the contact angle θ between the liquified polymer 230 and the support layer may be 50° to 70°.

The liquified polymer comprises a polymer and a solvent; wherein the polymer is selected from the group of polyurethanes (PU), thermoplastic polyamides (TPE-A or TPA), thermoplastic polyesters (TPE-E or TPE), thermoplastic styrenic block copolymers (TPE-S or TPS), thermoplastic polyurethanes (TPE-U or TPU), thermoplastic vulcanizates (TPE-V or TPV), rubber or ethylene-vinyl copolymer (EVA), preferably thermoplastic polyurethanes (TPE-U or TPU), and/or combinations thereof.

The solvent may be a mixture selected from the group of solvent-borne and/or water-borne solvents, preferably from the group of solvent-borne solvents, more preferably from the group of (C₁-C₆) ethers, (C₁-C₁₀) esters, (C₁-C₈) ketones, (C₁-C₈) alkanes, and/or combinations thereof.

The solvent may be a mixture of one or more of tetrahydrofuran (THF), methyl ethyl ketone (MEK), cyclohexane (CYC), ethyl acetate, butyl acetate, acetone, acetonitrile, benzyl alcohol, chlorobenzene, dichloromethane, dimethyl sulfoxide (DMSO), methyl tert-butyl ether (MTBE), N-methyl-2-pyrrolidone (NMP), dimethylacetamide (DMAC), dimethylformamide (DMF), pyridine, toluene, preferably THF and/or CYC.

The solvent may be cyclohexanone.

The ratio of the mixture may be in the range of 10 to 90 vol. %., preferably 20 to 80 vol. %, more preferably 30 to 70 vol. %. The concentration of the polymer may be in the range of 5 to 60 wt.%, preferably, 7 to 50 wt.%, more preferably 10 to 40 wt.%, most preferred 15 to 30 wt.%.

The polymer may be characterized by a Shore A value and/or Shore D value, wherein the Shore A value is in the range of 20 to 120, preferably, 40 to 100, more preferably, 60 to 80; and the Shore D value is in the range of 2 to 80, preferably 5 to 75, more preferably 8 to 70.

Furthermore, and as can be taken from Fig. 1, the liquified polymer is arranged in step 120 onto a support layer. The support layer is preferably a film and/or a mid-sole, thus, can also be a layer, which is not part of the sports shoe. In other words, the support layer may be any layer for arranging the liquified polymer.

In step 120, the liquified polymer is arranged onto a support layer via a stencil with one or more cutouts, wherein the liquified polymer is applied through one or more cutouts of the stencil. In this manner, the liquified polymer is printed on the support layer in a pattern.

The stencil is preferably made from alumina and/or steel. Any stencil material is conceivable, however, any material which is unreactive and/or non-dissolvable towards the solvent used in the production of the liquified polymer and/or the support layer may be used.

The arrangement of the liquified polymer 230 in step 120 may be performed by dispensing, spraying, jetting, printing, coating, spin coating, casting, depositing, dipping, brushing, roller coating, injecting and/or additive manufacturing such as stereolithography (SLA) and/or selective laser sintering (SLS).

The liquified polymer 230 may be arranged onto the support layer with a thickness of 1-10 mm. Preferably, the liquified polymer may be arranged onto the support layer with a thickness of 0.17-1 mm. The support layer 250 may be a mid-sole and/or a shoe upper and/or parts thereof. Preferably, the liquified polymer may be arranged onto the support layer with a thickness of 0.17-1 mm.

It is conceivable that the liquified polymer 230 may be arranged in a first section of the sports shoe 260 with a dynamic viscosity of 30000 to 50000 mPa·s and in a second section of the sports shoe 260 with a dynamic viscosity of 10000 to 30000 mPa·s.The contact angle θ between the liquified polymer 230 and the support layer 250 may be 30° to 110°, preferably 40° to 90°, more preferably 50° to 70°.

In step 120, the liquified polymer is arranged by brushing, coating, dipping, painting, automated dispensing, automated printing, and/or controlled dispensing.

The liquified polymer may be arranged onto one or more sections of the sports shoe 260. The sections may be a toe section, a forefoot section, a heel section, a midsole section, a sidewall section and/or an upper section. The liquified polymer 230 may be also arranged onto one or more predetermined portions of the sports shoe 260 determined using a torsion map, an abrasion map and/or a pressure map. In this manner, the liquified polymer can be arranged based on individual needs and requirements of the wearer.

In step 120, the liquified polymer 230 is arranged onto the support layer with a thickness of 0.1-10 mm. Preferably, the liquified polymer 230 may be arranged onto the support layer with a thickness of 0.12-4 mm. More preferably, the liquified polymer 230 may be arranged onto the support layer with a thickness of 0.15-2 mm. Even more preferably, the liquified polymer 230 may be arranged onto the support layer with a thickness of 0.17-1 mm. Most preferred, the liquified polymer 230 may be arranged onto the support layer with a thickness of 0.2-0.8 mm.

The thickness of the apparel or footwear 240 or at least a part thereof is 0.3-0.7 mm. Preferably, the thickness of the apparel or footwear may be of 0.5 mm. In the context of a sports shoe, this thickness may not include the midsole. However, it is conceivable that in some embodiments the thickness comprises the midsole.

In step 120, the liquified polymer is applied through one or more cutouts of the stencil. In this manner, the liquified polymer is printed on the support layer in a pattern. The pattern may be a grid, lattice, line, spiral, honeycomb, dots, wave, sine wave pattern or any combinations thereof.

In some embodiments, the stencil is a screen. Preferably, in some embodiments the stencil is a mesh. The mesh size comprises at least 12 yarns per square cm², preferably at least 24 yarns per square cm² and/or 32 yarns per square cm². The mesh size further comprises at least 50µm, preferably 80 µm, more preferably at least 100 µm diameter per yarn.

In some embodiments, force has been applied to the stencil when the liquified polymer is applied. In this manner, it is ensured that the liquified polymer is sufficiently printed and a pattern is obtained.

In the optional step 130 shown in dashed lines in Fig. 1, the stencil is removed after printing the liquified polymer in a pattern. However, the stencil comprising the liquified polymer throughout its one or more cutout(s) may not be removed but remains on the support layer 250.

In step 140, the printed liquified polymer is cured onto the support layer 250. In this manner, the apparel or footwear 240 is obtained, or at least a part thereof. Curing may be carried out using radiation. The stencil may remain on the support layer 250 during the step of curing the polymer.

In one embodiment, the solvent is a water-soluble solvent selected from the group comprising: ethanol, acetone, isopropyl alcohol, methanol, glycerol, propylene glycol and/or dimethyl sulfoxide (DMSO), preferably DMSO. According to this embodiment, the step of curing the printed liquified polymer comprises the step of treating the printed liquified polymer with an extraction agent, preferably water.

In one embodiment, the cured printed polymer is removed in step 160 from the support layer 250, thereby obtaining at least a part of the apparel or footwear 240. In addition, the part of the apparel or footwear 240 is attached in step 165 to a base layer. In this regard, the base layer may be a mid-sole.

Alternatively, the support layer with the cured printed polymer is attached to a base layer, in particular a bottom part of a mid-sole. In addition, the support layer 250 is removed from the part of the apparel or footwear 240. In this manner, at least a part of the apparel or footwear 240 attached on the base layer is obtained.

In particular, the step of attaching 165 is performed at a temperature between 30 to 300°C. Preferably, the step of attaching 165 is performed at a temperature between 50 to 280°C. Most preferred, the step of attaching 165 is performed at a temperature between 70 to 260°C. In addition, or alternatively, the step of attaching is performed in at most 12 min. Preferably, the step of attaching 165 is performed in at most 10 min. More preferably, the step of attaching 165 is performed in at most 6 min. Even more preferably, the step of attaching 165 is performed in at most 4 min. Further more preferred, the step of attaching is performed in at most 2 mi. Most preferred, the step of attaching is performed in at most 1 min.

In particular, in the step of attaching 165 the part of the apparel or footwear 240 to the base layer comprises one or more of glueing, cementing, press-heating, pressing and/or injection molding.

According to one embodiment, when using DMSO to redissolve the part and/or the midsole, the part and/or the midsole are brought into contact with the solvent, such as DMSO. The stencil-printed pattern arranged on the support layer, such as a film, e.g. transfer film, is placed on the midsole which in turn is being placed on e.g. a support structure to prevent deformation when under load.

Specifically, a component comprising the negative of the pattern of the midsole and/or outsole structure is being placed on top of the support layer 250. In the subsequent step, this arrangement is transferred and left for drying. During drying, the part and/or midsole and/or film are loaded with weights between 100 g and 100 kg. In this manner, complete bonding is ensured.

According to another embodiment, when heat-pressing the part of the present invention, no drying is performed. Specifically, bonding will be established via application of heat. In particular, heat may be applied during bonding. The part and/or mid-sole and/or film is loaded with weights between 100 g and 100 kg. In this manner, complete bonding is ensured. However, it is conceivable that the weight may vary. It is further conceivable that no weight is applied.

A combination of both embodiments described above may be conceivable. For example, the first bonding will be achieved via DMSO and subsequently a heat-pressing step is being conducted to ensure better bonding e.g. on the rim of the structure.

Alternatively, the step of attaching 165 the part of the apparel or footwear 240 comprises may comprise melting 170 the part 240. Subsequently, the melted part 240 may be sintered 175 and the sintered party may be redissolved 180. Subsequently, the redissolved part may be welded 185. Finally, the welded part may be pressed 190 the to the base layer.

In particular, welding the part is performed using infrared radiation (IR), high frequency (HF) radiation and/or ultrasonic radiation. In this regard, the part 240 of the footwear is preferably an outsole 290 of the sports shoe 260. The support layer 250 is a midsole. The support layer 250 may be a shoe upper. In particular, the support layer may be parts thereof.

In particular, the support layer 250 may be a film. Any film material, which is not soluble with the extraction agent or solvent used in the production of the liquified polymer is conceivable to be used. For example, when using water as an extraction agent, the film material is not water-soluble, e.g. textile, fiber, polyester-based materials, nylon or the like.

The midsole comprises a polymer based on expanded thermoplastic polyurethane. The midsole may comprise a polymer selected from the group comprising: thermoplastic polyurethanes (TPUs), polyether block amide (PEBA), ethylene vinyl acetate (EVA),
and/or thermoplastic elastomers, preferably polyurethane and/or expanded thermoplastic polyurethane (eTPU).

In particular, the liquified polymer and the mid-sole are dissolvable by the solvent, wherein preferably the solvent is the same. The polymer of the support layer, when being a midsole, and the liquified polymer are based on the same polymer, preferably TPU.

In the curing step 140, a curing temperature of between 20°C to 250°C is used. Preferably a curing temperature of 30°C to 150°C is used. More preferably, a curing temperature of 40°C to 50°C is used. In the curing step 140 of the liquified polymer 230, the curing time is between 2 min to 750 min. Preferably, the curing time may be between 5 min to 390 min. More preferably, the curing time may be between 10 min to 180 min.

Alternatively, in the curing step 140, a curing temperature of between 20°C to 150°C is used. Preferably, a curing temperature of between 40°C to 100°C may be used. More preferably, a curing temperature of between 60°C to 80°C may be used. Most referred, a curing temperature of between 72°C to 78°C may be used. In the step 140 of curing the liquified polymer 230, the curing time may be between 2 min to 24 hours. Preferably, the curing time may be between 5 min to 12 hours. More preferably, the curing time may be between 10 min to 6 hours. Most preferred the curing time may be between 20 min to 3 hours.

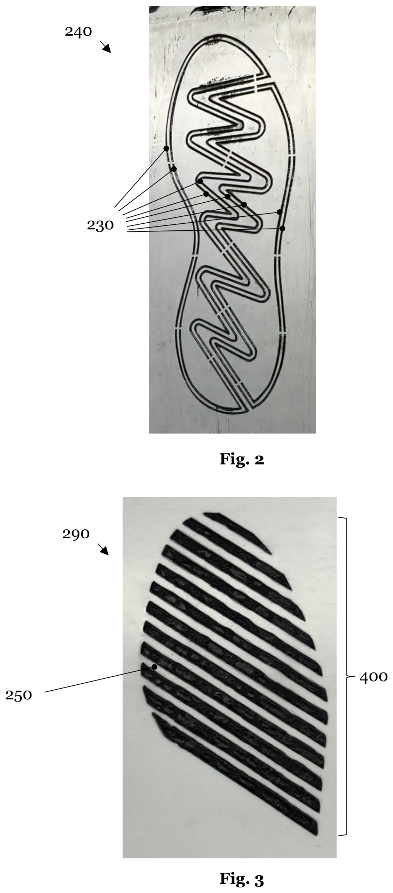

In order to avoid unnecessary redundancy, only differences or additions to the method described in **Fig. 1** will be discussed with respect to the different embodiments shown in **Figs. 2 to 4****.**

In **Fig. 2****,** an apparel or footwear 240 or at least a part thereof, which is manufactured according to the method 100 of the present invention, discussed in the context of Fig. 1 above, is shown. In particular, Fig. 2 shows a preferred embodiment of the apparel or footwear 240 manufactured according to the method of the invention (described in the context of Fig. 1 above). As can be taken from Fig. 2, the apparel or footwear 240 has a matte design. The stencil which has been used for printing the liquified polymer is made from alumina and/or steel material. In particular, and as shown in Fig. 2, the stencil has been not (yet) removed from the support layer (not shown in Fig. 2). It is conceivable, that the printed polymer is cured on the support layer without removing the stencil. However, it may also be desirable to remove the stencil in a subsequent step.

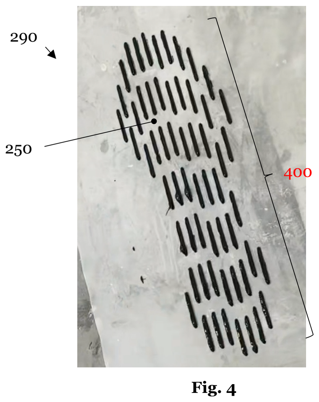

In **Figs. 3** **and** **4****,** two different embodiments of an outsole 290 manufactured according to the method 100 of the present invention is shown. As can be taken from **Fig. 3****,** the outsole 290 has a pattern and a surface structure 400, which has been formed by the arrangement of the cured polymer. In particular, the surface structure 400 as shown in Fig. 3, is a linear and continuous pattern with an oblique parallel alignment. The cured polymer is arranged in a one or more stripe(s) with a substantially constant distance between the one or more stripe(s). However, one or more stripes do not comprise a substantially constant distance, as can be taken from **Fig. 3****.** It is conceivable, that the one or more stripes comprise a constant distance. For doing so, a stencil with cutouts comprising constant distances may be used. In particular, the support layer 250 is visible in between the arrangement of the cured polymer in Fig. 3. As can be taken from Fig. 3, the support layer 250 is a film layer.

The outsole 290 shown in **Fig. 4** has a linear and discontinuous pattern. In particular, the surface structure 400 of the outsole 290 is arranged vertically along the longitudinal axis of the outsole 290. Specifically, the outsole has a pattern which comprises one or more bar(s) made from the arranged cured polymer. The one or more bar(s) are arranged in a continuous distance to each other. Specifically, the one or more bar(s) are arranged in a plurality of rows. Like in Fig. 3, in Fig. 4, the support layer 250 is a film layer.

It is noted that the above embodiments and / or examples may be combined with further aspects as described herein and details of the embodiments and / or examples may also be omitted, as will be understood by the skilled person. The scope of protection is determined by the claims and is not limited by the embodiments and / or examples disclosed in the above figures.

In the following, further embodiments are described to facilitate understanding of the invention:
1. Method (100) for manufacturing a sole structure (240), preferably for a sports shoe (260), comprising the steps of:
   a. providing (110) a liquified polymer (230) and/or a polymer layer or parts thereof (233);
   b. arranging (120) the liquified polymer and/or the polymer layer or parts thereof onto a base layer (250); and
   c. curing (130) the liquified polymer;

   wherein the method comprises a first group of steps and/or a second group of steps, wherein the first group of steps comprises:
      d. partially curing (140) the liquified polymer (230) obtained in step b; and
      e. texturing (150) the partially cured polymer (231) before step c;
   wherein the second group of steps comprises:
      f. disposing (160) the cured polymer (232) obtained in step c and/or the polymer layer or parts thereof (233) obtained in step b in a mold structure (300) comprising a textured sole imprint (340);
      g. heating (170) the mold structure (300), preferably by applying steam into the mold structure (300), while pressing the cured polymer (232) and/or the polymer layer or parts thereof (233) against the textured sole imprint (340);
      h. heating (180) the cured polymer (232) and/or the polymer layer or parts thereof (233) in order to melt at least partially the cured polymer and/or the polymer layer or parts thereof (233), and to substantially mold the textured sole imprint (340) on the outer surface of the cured polymer (232) and/or the polymer layer or parts thereof (233);
      i. thereby obtaining (190) the sole structure (240).
2. Method according to embodiment 1, wherein the polymer layer or parts thereof (233) is arranged on a carrier layer.
3. Method according to one of embodiments 1 or 2, wherein the polymer layer or parts thereof (233) comprise(s) one or more cutout(s).
4. Method according to one of the preceding embodiments, wherein in the step of texturing (150) the partially cured polymer, a texturing element is applied on the partially cured polymer, wherein the texturing element is preferably air-permeable.
5. Method according to embodiment 4, wherein the texturing element is applied onto the partially cured polymer for at least 5 minutes, preferably at least 1 hour, more preferably at least 6 hours, even more preferably at least 12 hours, most preferred at least 24 hours.
6. Method (100) according to one of the preceding embodiments, wherein the texturing element is a textile.
7. Method (100) according to one of the preceding embodiments, wherein the curing time in the step of partially curing (140) the liquified polymer (230) is 10 to 60 min, preferably 15 to 40 min, more preferably 20 to 35 min, most preferred 30 min.
8. Method (100) according to one of the preceding embodiments, wherein the sole structure (240) comprises a surface structure (400).
9. Method (100) according to the preceding embodiment, wherein the surface structure (400) is selected form the group comprising one or more of: rectangular, grid, lattice, line, spiral, honeycomb, dots, wave or any combination thereof.
10. Method (100) according to one of the preceding embodiments, wherein the sole structure (240) is an outsole (290) of the sports shoe (260).
11. Method (100) according to one of the preceding embodiments, wherein the liquified polymer (230) and/or the polymer layer or parts thereof (233) is arranged onto one or more sections of the sports shoe (260), including a toe section, a forefoot section, a heel section, a midsole section, a sidewall section and/or an upper section.
12. Method (100) according to one of the preceding embodiments, wherein the liquified polymer (230) and/or the polymer layer or parts thereof (233) is arranged onto one or more predetermined portions of the sports shoe (260) determined using a traction map, an abrasion map and/or a pressure map.
13. Method (100) according to one of the preceding embodiments, wherein the liquified polymer (230) and/or the polymer layer or parts thereof (233) is arranged onto the base layer with a thickness of 1-10 mm, preferably 2 mm-4 mm, most preferably 3 mm.
14. Method (100) according to one of the preceding embodiments, wherein the thickness of the sole structure (240) is 0.3 mm-0.7 mm, preferably 0.5 mm.
15. Method (100) according to one of the preceding embodiments, wherein the arranging step (120) is carried out by at least one of the following methods: brushing, coating, dipping, painting, automated dispensing, automated printing, controlled dispensing.
16. Method (100) according to one of the preceding embodiments, wherein the base layer (250) is a mid-sole and/or a shoe upper and/or parts thereof.
17. Method (100) according to one of the preceding embodiments, wherein the liquified polymer (230) is arranged in a first section of the sports shoe (260) with a dynamic viscosity of 30000 to 50000 mPa·s; and in a second section of the sports shoe (260) with a dynamic viscosity of 10000 to 30000 mPa·s.
18. Method (100) according to one of the preceding embodiments, wherein the contact angle θ between the liquified polymer (230) and the base layer (250) is 30° to 110°, preferably 40° to 90°, more preferably 50° to 70°.
19. Method (100) according to one of the preceding embodiments, wherein the curing steps (130, 140) are carried out using radiation.
20. Method (100) according to one of the preceding embodiments, wherein the liquified polymer comprises a polymer and a solvent; wherein the polymer is selected from the group of polyurethanes (PU), thermoplastic polyamides (TPE-A or TPA), thermoplastic polyesters (TPE-E or TPE), thermoplastic styrenic block copolymers (TPE-S or TPS), thermoplastic polyurethanes (TPE-U or TPU), thermoplastic vulcanizates (TPE-V or TPV), rubber or ethylene-vinyl copolymer (EVA), preferably thermoplastic polyurethanes (TPE-U or TPU), and/or combinations thereof.
21. Method (100) according to embodiment 18, wherein the solvent is a mixture selected from the group of solvent-borne and/or water-borne solvents, preferably from the group of solvent-borne solvents, more preferably from the group of (C1-C6) ethers, (C1-C10) esters, (C1-C8) ketones, (C1-C8) alkanes, and/or combinations thereof.
22. Method (100) according to one of embodiments 18 or 19, wherein the solvent is a mixture of one or more of tetrahydrofuran (THF), methyl ethyl ketone (MEK), cyclohexane (CYC), ethyl acetate, butyl acetate, preferably THF and/or CYC.
23. Method (100) according to one of embodiments 18 to 20, wherein the ratio of the mixture is in the range of 10 to 90 vol. %., preferably 20 to 80 vol. %, more preferably 30 to 70 vol. %.
24. Method (100) according to embodiment 18, wherein the polymer is characterized by a Shore A value and/or Shore D value, wherein the Shore A value is in the range of 20 to 120, preferably, 40 to 100, more preferably, 60 to 80; and the Shore D value is in the range of 2 to 80, preferably 5 to 75, more preferably 8 to 70.
25. Method (100) according to one of embodiments 18 to 22, wherein the ratio of the polymer to the solvent is in the range of 2:98 to 40:60 vol.%, preferably, 5:95 to 30:70 vol.%, more preferably, 10:90 to 20:80 vol.%.
26. Method (100) according to one of the preceding embodiments, wherein the liquified polymer (230) comprises a dynamic viscosity of 10000 to 50000 mPa·s, preferably of 20000 to 40000 mPa·s.
27. Method (100) according to one of the preceding embodiments, wherein in the curing steps (130, 140) a curing temperature of between 20°C to 150°C, preferably 30°C to 100°C, more preferably 40°C to 50°C is used; and wherein in the step of curing the liquified polymer (130) the curing time is between 2 min to 750 min, preferably, 5 min to 390 min, more preferably 10 min to 180 min.
28. Sole structure (240) manufactured according to the method (100) of one of embodiments 1 to 27.
29. Outsole (290) manufactured according to the method (100) of one of embodiments 1 to 27.
30. Outsole (290) according to the preceding embodiment, wherein the outsole has a surface structure (400).
31. Sports shoe (260) comprising a sole structure of embodiment 28 or an outsole according to one of embodiments 29 to 30.

## Claims

1. Method (100) for manufacturing an apparel or footwear (240), preferably of a sports shoe (260), comprising the steps of:
a. providing (110) a liquified polymer (230);
b. arranging (120) the liquified polymer onto a support layer (250) via a stencil with one or more cutouts, wherein the liquified polymer is applied through one or more cutouts of the stencil; thereby printing the liquified polymer on the support layer in a pattern;
c. optionally removing (130) the stencil, and
d. curing (140) the printed liquified polymer onto the support layer (250), thereby obtaining (150) the apparel or footwear (240) or at least a part thereof.

2. Method according to claim 1, wherein the liquified polymer comprises a polymer and a solvent; preferably
wherein the solvent is a water-soluble solvent selected from the group comprising:
ethanol, acetone, isopropyl alcohol, methanol, glycerol, propylene glycol and/or dimethyl sulfoxide (DMSO), preferably DMSO; preferably
wherein when a water-soluble solvent is used, the step of curing (140) the printed liquified polymer comprises the step of treating (155) the printed liquified polymer with an extraction agent, preferably water.

3. Method according to claim 1, further comprising the steps of:
e. removing (160) the cured printed polymer from the support layer (250), thereby obtaining at least a part of the apparel or footwear (240); and
f. attaching (165) the part of the apparel or footwear (240) to a base layer; preferably
further comprising the steps of:
g. attaching (162) the support layer with the cured printed polymer to a base layer, in particular a bottom part of a mid-sole; and
h. removing (167) the support layer from the part of the apparel or footwear (240), thereby obtaining at least a part of the apparel or footwear (240) attached on the base layer; preferably
wherein attaching is performed at a temperature between 30 to 300°C, preferably between 50 to 280°C, most preferred between 70 to 260°C and/or the attaching is performed in at most 12 min, preferably at most 10 min, more preferably at most 6 min, even more preferably at most 4 min, further more preferred at most 2 min, most preferred at most 1 min.

4. Method (100) according to the preceding claim, wherein in the step of attaching (165) the part of the apparel or footwear (240) to the base layer comprises one or more of glueing, cementing, press-heating, pressing and/or injection molding; or wherein alternatively the step of attaching (165) the part of the apparel or footwear (240) comprises the steps of:
i. melting (170) the part (240),
j. sintering (175) the melted part,
k. redissolving (180) the sintered part,
l. welding (185) the redissolved part; and
m. pressing (190) the welded part to the base layer; preferably
wherein welding the part is performed using infrared radiation (IR), high frequency (HF) and/or ultrasonic.

5. Method (100) according to one of the preceding claims, wherein arranging (120) the liquified polymer (230) is performed comprising one or more of: dispensing, spraying, jetting, printing, coating, spin coating, casting, depositing, dipping, brushing, roller coating, injecting and/or additive manufacturing such as stereolithography (SLA) and/or selective laser sintering (SLS); and/or wherein the part (240) of the footwear is an outsole (290) of the sports shoe (260); and/or
wherein the support layer (250) is a midsole and/or a shoe upper and/or parts thereof; preferably wherein the midsole comprises a polymer selected from the group comprising: thermoplastic polyurethanes (TPUs), polyether block amide (PEBA), ethylene vinyl acetate (EVA), and/or thermoplastic elastomers, preferably polyurethane and/or expanded thermoplastic polyurethane (eTPU); and/or wherein the support layer (250) is a film.

6. Method (100) according to one of the preceding claims, wherein the liquified polymer (230) is arranged (120) onto one or more sections of the sports shoe (260), including a toe section, a forefoot section, a heel section, a midsole section, a sidewall section and/or an upper section; and/or
wherein the liquified polymer (230) is arranged (120) onto one or more predetermined portions of the apparel or footwear determined using a torsion map, an abrasion map and/or a pressure map; and/or
wherein the liquified polymer (230) is arranged (120) onto the support layer with a thickness of 0.1-10 mm, preferably 0.12-4 mm, more preferably 0.15-2 mm, even more preferably 0.17-1 mm; most preferred 0.2-0.8 mm; and/or wherein the thickness of the apparel or footwear (240) or at least a part thereof is 0.3-0.7 mm, preferably 0.5 mm; and/or
wherein the stencil is a screen, preferably a mesh.

7. Method (100) according to one of the preceding claims, wherein the liquified polymer (230) is arranged in a first section of the apparel or footwear with a dynamic viscosity of 50000 to 200000 mPa·s; and in a second section of the apparel or footwear with a dynamic viscosity of 10000 to 50000 mPa·s; and/or wherein the contact angle θ between the liquified polymer (230) and the support layer (250) is 30° to 110°, preferably 40° to 90°, more preferably 50° to 70°; and/or wherein the curing step (140) is carried out using radiation; and/or wherein the liquified polymer comprises a polymer and a solvent; wherein the polymer is selected from the group of polyurethanes (PU), thermoplastic polyamides (TPE-A or TPA), thermoplastic polyesters (TPE-E or TPE), thermoplastic styrenic block copolymers (TPE-S or TPS), thermoplastic polyurethanes (TPE-U or TPU), thermoplastic vulcanizates (TPE-V or TPV), rubber or ethylene-vinyl copolymer (EVA), preferably thermoplastic polyurethanes (TPE-U or TPU), and/or combinations thereof; preferably
wherein the liquified polymer and the support layer, preferably a midsole are dissolvable by the solvent, wherein preferably the solvent is the same.

8. Method (100) according to one of the preceding claims, wherein the polymer of the support layer, preferably a midsole and the liquified polymer are TPU; and/or wherein the pattern is a grid, lattice, line, spiral, honeycomb, dots, wave, sine wave pattern or any combinations thereof.

9. Method (100) according to any of claims 2 to 5, wherein the solvent is a mixture selected from the group of solvent-borne and/or water-borne solvents, preferably from the group of solvent-borne solvents, more preferably from the group of (C1-C6) ethers, (C1-C10) esters, (C1-C8) ketones, (C1-C8) alkanes, and/or combinations thereof; and/or
wherein the solvent is a mixture of one or more of tetrahydrofuran (THF), methyl ethyl ketone (MEK), cyclohexane (CYC), ethyl acetate, butyl acetate, acetone, acetonitrile, benzyl alcohol, chlorobenzene, dichloromethane, dimethyl sulfoxide (DMSO), methyl tert-butyl ether (MTBE), N-methyl-2-pyrrolidone (NMP), dimethylacetamide (DMAC), dimethylformamide (DMF), pyridine, toluene, preferably THF and/or CYC.

10. Method (100) according to any of claims 6 to 7, wherein the ratio of the mixture is in the range of 10 to 90 vol. %., preferably 20 to 80 vol. %, more preferably 30 to 70 vol. %.

11. Method (100) according to any of claims 2 to 10, wherein the polymer is **characterized by** a Shore A value and/or Shore D value, wherein the Shore A value is in the range of 20 to 120, preferably 40 to 100, more preferably 60 to 80; and the Shore D value is in the range of 2 to 80, preferably 5 to 75, more preferably 8 to 70; and/or
wherein the concentration of the polymer is in the range of 5 to 60 wt.%, preferably, 7 to 50 wt.%, more preferably 10 to 40 wt.%, most preferred 15 to 30 wt.%.

12. Method (100) according to one of the preceding claims, wherein the liquified polymer (230) comprises a dynamic viscosity of 10000 to 50000 mPa·s,preferably of 20000 to 40000 mPa·s; and/or
wherein in the curing step (140) a curing temperature of between 20°C to 250°C, preferably 30°C to 150°C, more preferably 40°C to 50°C is used; and wherein in the step of curing the liquified polymer (230) the curing time is between 2 min to 750 min, preferably, 5 min to 390 min, more preferably 10 min to 180 min; and/or when dependent on claim 2, wherein in the curing step (140) a curing temperature of between 20°C to 150°C, preferably 40°C to 100°C, more preferably 60°C to 80°C, most referred 72°C to 78°C is used; and wherein in the step of curing the liquified polymer (230) the curing time is between 2 min to 24 hours, preferably, 5 min to 12 hours, more preferably 10 min to 6 hours, most preferred 20 min to 3 hours.

13. An apparel or footwear (240) or at least a part thereof manufactured according to the method (100) of one of claims 1 to 12.

14. Outsole (290) manufactured according to the method (100) of one of claims 1 to 12; preferably
wherein the outsole has a surface structure (400) formed by the cured polymer.

15. Sports shoe (260) comprising an apparel or footwear (240) or at least a part thereof of claim 13 or an outsole according to claim 14.
